# EUROPEAN PATENT APPLICATION

(11) **EP 4 564 125 A1**
(43) Date of publication of application: **04.06.2025**
(21) Application number: 24216483.8
(22) Date of filing: 29.11.2024
(51) Int. Cl.: G05G 1/40, G05G 1/46, B60T 7/06, B60K 23/02, F16D 48/02

(54) **MOVABLE PEDAL BOX**

(30) Priority: 01.12.2023 GB 202318435
(71) Applicant: McLaren Automotive Limited, Woking, Surrey GU21 4YH (GB)
(72) Inventor: Fortina, Andrea, Woking, GU21 4YH (GB); Moore, Steven, Woking, GU21 4YH (GB); Logan, Samuel, Woking, GU21 4YH (GB); Skelly, Oliver, Woking, GU21 4YH (GB)
(74) Representative: Slingsby Partners LLP

(57) **Abstract**

Disclosed is a movable pedal apparatus for driving a remotely mounted actuator, the movable pedal apparatus comprising: a pedal; a connection member; a first joint through which the pedal is coupled to the connection member, the first joint permitting transfer of rotation of the pedal to the connection member to cause rotation of the connection member; and a second joint through which the connection member is couplable to the remotely mounted actuator, the second joint permitting rotation of the connection member to cause an input to the remotely mounted actuator.

## Description

This invention relates to a movable pedal box for vehicles.

Vehicles comprise a seat for the driver to sit in, and one or more pedals for the driver to depress in order to drive the vehicle. The pedals may include a throttle pedal, a brake pedal, and optionally a clutch pedal for manual vehicles. Typically, to allow for drivers of different sizes and heights, the position of the seat is adjustable. A taller driver may move the seat away from the pedals, and a shorter driver may move the seat towards the pedals.

Seat adjustment mechanisms can take up a large amount of space in the cabin of the vehicle. In particular, as the seat adjustment mechanism is often located under the seat, the seat adjustment mechanism can result in the height of the seat to be increased. In some types of vehicles, such as sports cars and race cars, is can be beneficial for the height of the vehicle to be reduced, so as to improve aerodynamics.

As a result, some vehicles are designed without a seat adjustment mechanism. Instead, the pedal box, which comprises the pedals, may be adjustable. In this way, distance between the seat and the pedals can still be adjusted for drivers of different heights.

However, adjustable pedal boxes can add complexity to the linkage between the pedals and their respective actuators. For example, to account for the movement of the pedal boxes, the later components, such as the actuators, may also need to move, which adds complexity. Alternatively, if the actuator is fixed, this may limit the amount of type of movement of the pedal box, which reduces adjustability.

In some cases, the actuator may need to be fitted in different locations. For example, different models of a vehicle may have the actuator placed in different locations, i.e., left-hand and right-hand drive. Moving the actuator to different locations may change the distance and/or route between the actuator and the brake pedal. Changing the distance and/or route between the actuator and the brake pedal may require the pedal box to be redesigned. This can add complexity to the design of vehicles.

It is therefore desirable for there to be an improved movable pedal apparatus.

According to a first aspect of the present invention there is provided a movable pedal apparatus for driving a remotely mounted actuator, the movable pedal apparatus comprising: a pedal; a connection member; a first joint through which the pedal is coupled to the connection member, the first joint permitting transfer of rotation of the pedal to the connection member to cause rotation of the connection member; and a second joint through which the connection member is couplable to the remotely mounted actuator, the second joint permitting rotation of the connection member to cause an input to the remotely mounted actuator; wherein connection member has a variable length between the first joint and the second joint so as to permit translational movement of the first joint relative to the second joint so that the pedal is movable between an initial position and a subsequent position.

According to a second aspect of the present invention there is provided a movable pedal apparatus for driving an actuator, the movable pedal apparatus comprising: the actuator; a connection member; a first joint through which a pedal is couplable to the connection member, the first joint permitting transfer of rotation of the pedal to the connection member to cause rotation of the connection member; and a second joint through which the connection member is coupled to the actuator, the second joint permitting rotation of the connection member to cause an input to the actuator; wherein connection member has a variable length between the first joint and the second joint so as to permit translational movement of the first joint relative to the second joint so that the actuator is movable between an initial position and a subsequent position.

In some implementations, the first joint may comprise at least three degrees of freedom and the second joint may comprise at least three degrees of freedom.

According to a third aspect of the present invention there is provided a movable pedal apparatus for driving a remotely mounted actuator, the movable pedal apparatus comprising: a pedal; a connection member; a first joint through which the pedal is coupled to the connection member, the first joint permitting transfer of rotation of the pedal to the connection member to cause rotation of the connection member; and a second joint through which the connection member is couplable to the remotely mounted actuator, the second joint permitting rotation of the connection member to cause an input to the remotely mounted actuator; wherein the first joint comprises at least three degrees of freedom and the second joint comprises at least three degrees of freedom so that the pedal is movable from an initial position to a subsequent position.

According to a fourth aspect of the present invention there is provided a movable pedal apparatus for driving an actuator, the movable pedal apparatus comprising: the actuator; a connection member; a first joint through which a pedal is couplable to the connection member, the first joint permitting transfer of rotation of the pedal to the connection member to cause rotation of the connection member; and a second joint through which the connection member is coupled to the actuator, the second joint permitting rotation of the connection member to cause an input to the actuator; wherein the first joint comprises at least three degrees of freedom and the second joint comprises at least three degrees of freedom so that the actuator is movable from an initial position to a subsequent position.

In some implementations, the first joint and the second joint may be arranged to translate relative to one another.

In some implementations, the first joint may comprise a cardanic joint. In some implementations, the second joint may comprise a cardanic joint. In some implementations, the first joint may comprise a homokinetic joint. In some implementations, the second joint may comprise a homokinetic joint.

In some implementations, the movable pedal apparatus may further comprise a pedal box. The pedal may be mounted to the pedal box.

In some implementations, the pedal may be constrained to translate along a linear path between the initial position and the subsequent position.

In some implementations, the pedal may be slidably mounted to the pedal box so that the pedal box defines the linear path.

In some implementations, the pedal box may comprise: a mounting part on which the pedal is mounted; and a base part on which the mounting part is slidable.

In some implementations, the pedal may be constrained to rotate about a pedal axis.

In some implementations, the pedal may be rotatably mounted to the pedal box at a pedal joint so that the pedal joint defines the pedal axis.

In some implementations, the pedal may be coupled to the first joint through a first rocker so that rotation of the pedal causes rotation of the first joint.

In some implementations, the first joint may be the pedal joint so that rotation of the pedal causes rotation of the first joint.

In some implementations, the actuator may comprise an input rod for causing input to the actuator. The second joint may be coupled to the input rod through a second rocker so that rotation of the second joint causes translation of the input rod.

In some implementations, the connection member may comprise a first sub member and a second sub member. The first sub member may be translatable relative to the second sub member so as to permit extension of the connection member.

In some implementations, the first sub member may at least partially enclose the second sub member.

In some implementations, the first sub member and the second sub member may be constrained to rotate together when the connection member rotates.

In some implementations, the first sub member and the second sub member may be constrained to rotate together by a spline formed in the first sub member and the second sub member.

In some implementations, the pedal may be a brake pedal of a vehicle. The actuator may be one or more of: a brake actuator, a hydraulic brake booster, a pneumatic brake booster, a brake-by-wire actuator, a standard master cylinder, a tandem master cylinder, a single master cylinder, and a twin master cylinder.

In some implementations, the apparatus may comprise both the pedal and the actuator.

According to a fifth aspect of the present invention there is provided a vehicle comprising the movable pedal apparatus according to any preceding claim.

The present invention will now be described by way of example with reference to the accompanying drawings. In the drawings:
Figure 1 shows a first embodiment of a movable pedal apparatus of the invention.
Figure 2 shows a second embodiment of the movable pedal apparatus of the invention.
Figure 3 shows a vehicle comprising the movable pedal apparatus of the invention.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a movable pedal apparatus for a vehicle.

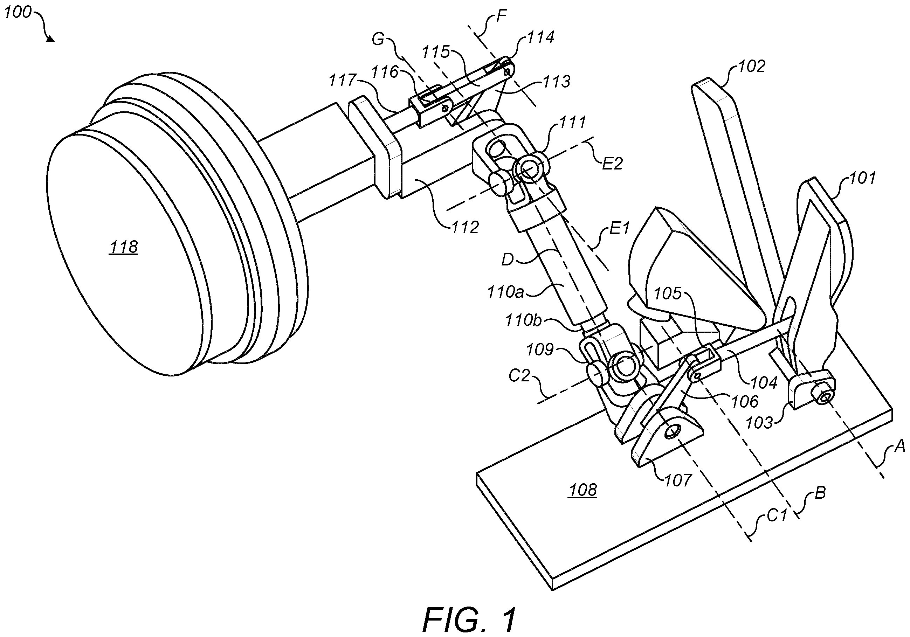

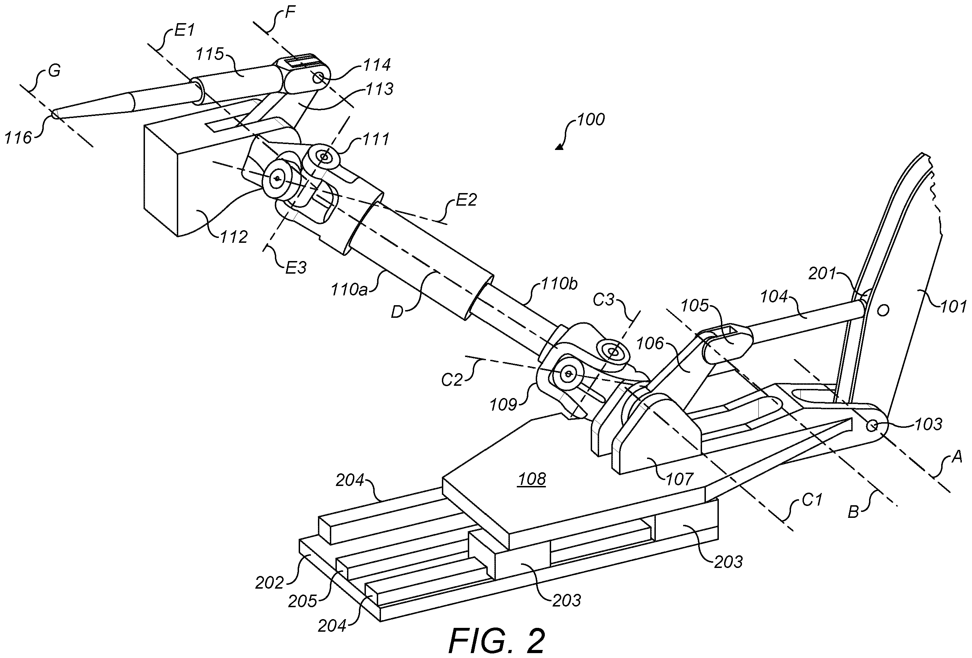

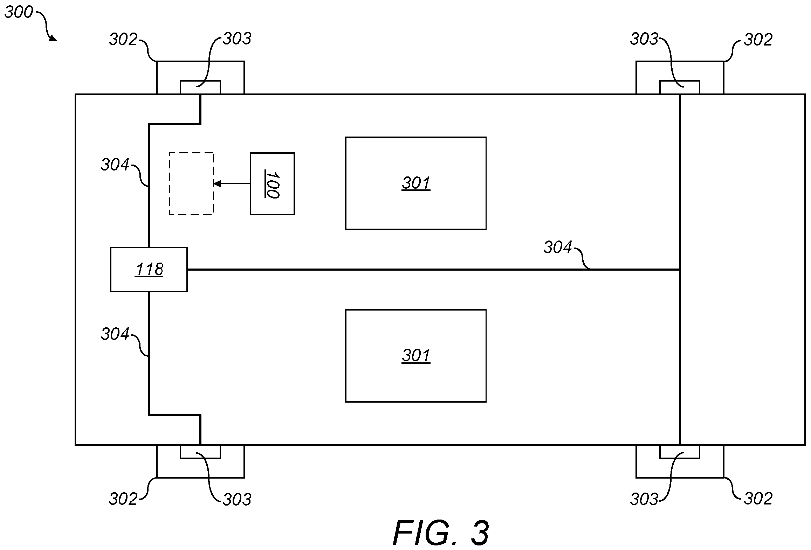

Figures 1 and 2 show embodiments of the movable pedal apparatus 100. Figure 3 shows where the pedal apparatus 100 is fitted to the vehicle 300.

The apparatus 100 may comprise a pedal 101. The pedal 101 may be configured for driving an actuator 118. The apparatus 100 may comprise the actuator 118. In some cases, the actuator 118 may not form part of the apparatus 100, and the apparatus 100 may be couplable to the actuator 118 so as to drive the actuator 118.

In an alternative embodiment, the apparatus 100 may comprise the actuator 118. The pedal 101 may be configured for driving the actuator 118. The apparatus 100 may comprise the pedal 101. In some cases, the pedal 101 may not form part of the apparatus 100, and the apparatus 100 may be couplable to the pedal 101 so as to receive inputs from the pedal 101.

As shown in Figure 3, the apparatus 100 may be fixed in the footwell of the vehicle 300 in front of the driver's seat 301. The apparatus 100 may be movable away from, and towards, the driver's seat 301, as illustrated by the hashed line in Figure 3. In this way, the position of the pedal 101 in the apparatus 100 may be moved. For example, to suit the height of the driver without requiring the actuator 118 to be moved. The actuator 118 may be mounted to the vehicle 300. The actuator 118 may be a remotely mounted actuator 118. In other words, the actuator 118 may be mounted in a fixed position away from the apparatus 100. Figure 3 shows the actuator 118 being fixed to the central front portion of the vehicle 300. Other locations may be suitable for mounting the actuator 118. The remotely mounted actuator 118 may not be movable with the apparatus 100. The apparatus 100 may move relative to the remotely mounted actuator 118.

In the alternative embodiment described herein, the apparatus 100 may be fixed in the to the vehicle 300 near the actuator 118. The apparatus 100 may be movable away from, and towards, the driver's seat 301. In this way, the position of the actuator 118 in the apparatus 100 may be moved. For example, to suit fitting different models of vehicle 300 without requiring the pedal 101 to be moved. The pedal 101 may be mounted to the vehicle 300. The pedal 101 may be a fixedly mounted pedal 101 remote from the actuator 118. In other words, the pedal 101 may be mounted in a fixed position away from the apparatus 100. The pedal 101 may not be movable with the apparatus 100. The apparatus 100 may move relative to the pedal 101.

The actuator 118 may be a hydraulic actuator. The pedal 101 may be a brake pedal 101. In such a case, the actuator 118 may be one or more of: a brake actuator, a hydraulic brake booster, a pneumatic brake booster, a brake-by-wire actuator, a standard master cylinder, a tandem master cylinder, a single master cylinder, and a twin master cylinder. Alternatively, the pedal 101 may be a throttle pedal or a clutch pedal. In which case, the actuator 118 may comprise the corresponding actuator for the pedal 101.

As shown in Figure 3, the vehicle 300 may comprise one or more wheels 302. Typically, the vehicle 300 may comprise four wheels 302 as shown in Figure 3. One or more of the wheels 302 may comprise a brake 303. The brake 303 may be configured to slow down the respective wheel 302. In the case where the pedal 101 is a brake pedal 101, the brake actuator 118 may control the brakes 303. The brake actuator 118 may be connected to the brakes 303 through a connection 304. The connection 304 may link all the brakes 303 to the brake actuator 118 separately, or individually. The connection 304 may be a hydraulic brake line. The brake line 304 may be flexible. The brake line 304 may be rigid. The brake line 304 may comprise a rubber material. The brake line 304 may comprise a metal material.

As shown in Figure 1, the apparatus 100 may comprise a second pedal 102. The second pedal 102 may not be configured to control the actuator 118. Instead, the second pedal 102 may control a different component. In the case that the pedal 101 is a brake pedal, the second pedal 102 may comprise a throttle pedal or a clutch pedal.

The apparatus 100 may comprise third pedal (not shown) in the case of a manual vehicle 300.

The apparatus 100 may comprise a pedal box 108, 202. The pedal 101 may be mounted to the pedal box 108, 202. The pedal box 108, 202 may be movable relative to the vehicle 300. In this way, the pedal 101 on the pedal box 108 may be moved to suit the height of the driver. Each of the pedals 101, 102 may be mounted to the same pedal box 108, 202 as shown in Figure 1. In this way, each of the pedals 101, 102 may be moved together to suit the height of the driver. Alternatively, different pedals 101, 102 may be mounted to separate pedal boxes 108, 202. In the alternative embodiment described herein, the pedal box 108 may be moved to suit the different positions of the actuator 118.

The pedal 101 may be constrained to rotate. The pedal 101 may be constrained to rotate about a pedal axis A. In this way, inputs from the driver's foot on the pedal 101 may cause the pedal 101 to rotate. The pedal box 108, 202 may define the pedal axis A. The pedal 101 may be constrained to rotate about a pedal joint 103. The pedal joint 103 may be located on the pedal box 108, 202. The pedal 101 may be mounted to the pedal box 108, 202 through the pedal joint 103. The pedal joint 103 may therefore define the pedal axis A. The pedal joint 103 may comprise protrusion extending from the pedal box 108, 202 to either side of the base of the pedal 101. The pedal joint 103 may further comprise a pin extending through the protrusions and through the base of the pedal 101. Pedal 101 may rotate on the pin, with the pin fixed to the protrusions. Alternatively, the pedal 101 and the pin may rotate together on the protrusions.

The apparatus 100 may comprise a connection member 110. The connection member 110 may provide a means for transmitting input between the pedal 101 and the actuator 118. The pedal 101 may be coupled to the connection member 110. The pedal 101 may be coupled to the connection member 110 through a first joint 109. The first joint 109 may permit rotation of the pedal 101 to the connection member 110 to cause rotation of the connection member 110. The first joint 109 may rotate about a primary first joint axis C1.

As shown in Figures 1 and 2, the pedal axis A and the primary first joint axis C1 may be parallel. Figures 1 and 2 show the pedal axis A and the primary first joint axis C1 being displaced from one another. The pedal joint 103 and the first joint 109 may be separate joints. The pedal joint 103 and the first joint 109 may be coupled and separated through an intermediate mechanism. The pedal 101 may be coupled to the first joint 109 through a first rocker 104, 105, 106. In this way, rotation of the pedal 101 indirectly causes rotation of the first joint 109. The first rocker 104, 105, 106 may comprise a pedal rod 104 coupled to the pedal 101. The pedal rod 104 may be rotatably coupled to the pedal 101. The first rocker 104, 105, 106 may comprise a first joint rod 106 coupled to the first joint 109. The first joint rod 106 may be fixably coupled to the pedal 101. The pedal rod 104 and the first joint rod 106 may be coupled through a first rocker joint 105. The first rocker joint 105 may rotate about a first rocker joint axis B. Rotation of the pedal 101 causes the pedal rod 104 to translate towards the pedal joint 103, this in turn causes the pedal rod 104 to rotate about the first rocker joint 105 relative the first joint rod 106, this in turn causes the first joint rod 106 to rotate the first joint 109. The first rocker 104, 105, 106 may permit the pedal 101 and the first joint 109 to rotate at different rates. In other words, the pedal 101 and the first joint 109 may be geared relative to one another by the first rocker 104, 105, 106. In this way, large inputs from the pedal 101 can be reduced, or small inputs from the pedal 101 can be increased.

In an alternative embodiment, the pedal axis A and the primary first joint axis C1 may be the same axis. The pedal joint 103 and the first joint 109 may be the same joint. In this way, rotation of the pedal 101 directly causes rotation of the first joint 109.

In another alternative embodiment, the pedal 101 may be constrained to translate relative to the pedal box 108, 202. The pedal 101 may be constrained to translate linearly relative to the pedal box 108, 202. The pedal 101 may be coupled to the first joint 101 through a yoke. Translation of the pedal 101 may input the yoke, this in turn causes the first joint 101 to rotate.

The connection member 110 may be coupled to the actuator 118. The connection member 110 may be coupled to the actuator 118 through a second joint 111. The second joint 111 may permit rotation of the connection member 110 to cause an input to the actuator 118. The second joint 111 may rotate about a primary second joint axis E1.

The connection member 110 may rotate about a connection member axis D. Rotation of the first joint 109 about the primary first joint axis C1 may cause the connection member 110 to rotate about the connection member axis D. In turn, rotation of the connection member 110 about the connection member axis D may cause the second joint 111 to rotate about the primary second joint axis E1. Rotation of the first joint 109 about the primary first joint axis C1 provides a first degree of freedom of the first joint 109. Rotation of the second joint 111 about the primary second joint axis E1 provides a first degree of freedom of the second joint 111.

The first joint 109 may comprise a second degree of freedom. The first joint 109 may rotate about a secondary first joint axis C2. In the embodiment shown in Figures 1 and 2, the second degree of freedom permits the connection member 110 to rotate upward relative to the pedal body 108, 202. At the same time, the first joint 109 is still permitted to rotate about the primary first joint axis C1. The second joint 111 may comprise a second degree of freedom. The second joint 111 may rotate about a secondary second joint axis E2. In the embodiment shown in Figures 1 and 2, the second degree of freedom permits the connection member 110 to rotate downward relative to the actuator 118. At the same time, the second joint 111 is still permitted to rotate about the primary first joint axis C1. The second degree of freedom of the first joint 109 and the second joint 111 permits the pedal 101 to move from an initial position to a subsequent position. In particular, the initial position of the pedal 101 and the subsequent position of the pedal 101 may be displaced vertically relative to the actuator 118. In this way, the apparatus 100 may be configured to allow vertical displacement of the pedal 101 while still allowing rotational drive to the transferred through the first joint 109, to the connection member 110, to the second joint 111.

The first joint 109 may comprise a third degree of freedom. The first joint 109 may rotate about a tertiary first joint axis C3. In the embodiment shown in Figures 1 and 2, the third degree of freedom permits the connection member 110 to rotate laterally relative to the pedal body 108, 202 (as illustrated by the different positions in Figures 1 and 2). At the same time, the first joint 109 is still permitted to rotate about the primary first joint axis C1. The second joint 111 may comprise a third degree of freedom. The second joint 111 may rotate about a tertiary second joint axis E3. In the embodiment shown in Figures 1 and 2, the third degree of freedom permits the connection member 110 to rotate laterally relative to the actuator 118 (as illustrated by the different positions in Figures 1 and 2). At the same time, the second joint 111 is still permitted to rotate about the primary first joint axis C1. The third degree of freedom of the first joint 109 and the second joint 111 permits the pedal 101 to move from an initial position to a subsequent position. In particular, the initial position of the pedal 101 and the subsequent position of the pedal 101 may be displaced laterally relative to the actuator 118. In this way, the apparatus 100 may be configured to allow lateral displacement of the pedal 101 while still allowing rotational drive to the transferred through the first joint 109, to the connection member 110, to the second joint 111. Further, the combination of the second and third degrees of freedom of the first joint 109 and the second joint 111 may allow both vertical and lateral displacement of the pedal 101 relative to the actuator 118 at the same time, while still allowing rotational drive to the transferred through the first joint 109, to the connection member 110, to the second joint 111. In this way, the translation of the pedal 101 relative to the actuator 118 (i.e., adjustment of position) may be decoupled from inputs on the pedal 101 being transferred to the actuator 118 (i.e., drive of the actuator). In other words, the two degrees of freedom, adjustment of position and drive of the actuator, may be decoupled.

The first joint 109 may comprise a cardanic joint. The second joint 111 may comprise a cardanic joint. A cardanic joint may also be known as a universal coupling. The cardanic joint may provide the three degrees of freedom about the primary, secondary and tertiary axes of the first joint 109 and the second joint 111. The first joint 109 and the second joint 111 may in combination provide a double universal coupling. The first joint 109 may comprise a homokinetic joint. The second joint 111 may comprise a homokinetic joint. A homokinetic joint may also be known as a constant-velocity joint. The homokinetic joint may provide the three degrees of freedom about the primary, secondary and tertiary axes of the first joint 109 and the second joint 111. The first joint 109 and the second joint 111 may in combination provide a double homokinetic coupling.

The first joint 109 and the second joint 111 may be arranged to translate relative to one another. The first joint 109 and the second joint 111 may move away from one another and/or towards one another. The connection member 110 may have a variable length. The connection member 110 may have a variable length between the first joint 109 and the second joint 111. The connection member 110 may be configured such that its length between the first joint 109 and the second joint 111 can be varied. The connection member 110 may be extendable. The connection member 110 may be contractable. The extendable/contractable connection member 110 may permit translational movement of the first joint 109 relative to the second joint 111. In this way, the pedal 101 may be movable from the initial position to the subsequent position. In particular, the pedal 101 may not be constrained to a rotational path around the actuator 118 about the first joint 109 and about the second joint 111. Instead, the pedal 101 may translate relative to the actuator 118 in any direction. In this way, the translation of the pedal 101 relative to the actuator 118 (i.e., adjustment of position) may be decoupled from inputs on the pedal 101 being transferred to the actuator 118 (i.e., drive of the actuator). In other words, the two degrees of freedom, adjustment of position and drive of the actuator, may be decoupled.

The pedal 101 may translate along a linear path between the initial position and the subsequent position. In the case of vertical displacement of the pedal 101 relative to the actuator 118, the connection member 110 may rotate upwards at one end and downwards at the other end. In the case of lateral displacement of the pedal 101 relative to the actuator 118, the connection member 110 may rotate left at one end right at the other end. To allow the translation path of the pedal 101 to be linear, and not constrained to be curved, the connection member 110 may extend and contract, as required. The connection member 110 may be at a shortest length when the first joint 109 and the second joint 111 are in a neutral position. In the neutral position the primary first joint axis C1, the primary second joint axis E1, and the connection member axis D may be in line. In the neutral position, the secondary first joint axis C2 and the secondary first joint axis C2 may be parallel, and the tertiary first joint axis C3 and the tertiary second joint axis C3 may be parallel. When the first joint 109 and/or the second joint 110 are moved away from neutral position, the connection member 110 may extend in length such that the pedal 101 may translate linearly relative to the actuator 118. In some cases, the path of the pedal 101 relative to the actuator 118 may not be perfectly linear. The provision of the extendable/contractable connection member 110 allows the path of the pedal 101 to not be constrained by the dynamics of the first joint 109 and the second joint 110 alone (rotation about the first joint 109 and about the second joint 110). A range of different paths of the pedal 101 relative to the actuator 118 may be possible.

The connection member 110 may comprise a first sub member 110a and a second sub member 11 0b. The first sub member 110a and the second sub member 110b may be translatable relative to one another. The first sub member 110a and the second sub member 110b may permit the extension and contraction of the connection member 110. The first sub member 110a may at least partially enclose the second sub member 110b. The second sub member 110b may translate relative to the first sub member 110a inside of the first sub member 110a. As shown in the embodiment in Figures 1 and 2, the first sub member 110a may comprise a tube in which the second sub member 110b comprising a shaft may slide. It will be appreciated that the opposite arrangement, a first sub member 110a inside a second sub member 110b, may also be suitable.

The first sub member 110a and the second sub member 110b may be constrained to rotate together when the connection member 110 rotates. The first sub member 110a and the second sub member 110b may be constrained to rotate together about the connection member axis D. In this way, the connection member 110 may be extendable while still allowing rotational drive to the transferred through the first joint 109, to the connection member 110, to the second joint 111. The first sub member 110a and the second sub member 110b may be constrained to rotate together by a spline. The spline may be formed in the first sub member and the second sub member. The first sub member 110a may comprise a splined cavity the second sub member 110b may comprise a splined shaft for insertion into the splined cavity. Alternatively, the first sub member 110a and the second sub member 110b may comprise a non-circular connection, such that the first sub member 110a and the second sub member 110b are constrained to rotate together. The first sub member 110a may comprise a non-circular cross-sectioned cavity and the second sub member 110b may comprise a complementary non-circular cross-sectioned shaft. For example, the first sub member 110a may comprise a square cross-sectioned cavity and the second sub member 110b may comprise a complementary square cross-sectioned shaft that fits into the cavity.

Alternatively, the connection member 110 may comprise an alternative means of extension and contraction. The connection member 110 may comprise a telescopic mechanism configured to extend and contract. The connection member 110 may comprise a plastic material configured to extend and contract.

The pedal 101 may be constrained to translate along a linear path between the initial position and the subsequent position. The linear translation of the pedal 101 may be vertical relative to the actuator 118. The linear translation of the pedal 101 may be lateral relative to the actuator 118. The linear translation of the pedal 101 may be in any direction relative to the actuator 118.

The pedal 101 may be slidably mounted to the pedal box 108, 202. The pedal box 108, 202 may define the linear path of the pedal 101. The pedal 101 may slide on the pedal box 108, 202 along the linear path. The pedal box 108, 202 may be mounted to the vehicle 300 such that the linear path of the pedal 101 from the initial position to the subsequent position permits the pedal 101 position to be adjusted for the driver of the vehicle 300. The pedal 101 may be movable to more than one subsequent position such that a range of pedal 101 positions are available to the driver of the vehicle 300. In the alternative embodiment described herein, the pedal box 108 may be movable to suit the different positions of the actuator 118.

The pedal box 108, 202 may comprise a mounting part 108. The pedal 101 may be mounted to the mounting part 108. The pedal 101 may be fixedly mounted in relation to translation to the mounting part 108. The pedal 101 may be rotatably mounted to the mounting part 108 by means of the pedal joint 103 as described herein. The pedal box 108, 202 may comprise a base part 202. The mounting part 108 may be slidably mounted to the base part 202. The mounting part 108 may be configured to slide on the base part 202. By sliding the mounting part 108 relative to the base part 202, the pedal 101 may move along the linear path.

The mounting part 108 and the base part 202 can be seen in the embodiment in Figure 2. The base part 202 may comprise one or more rails 204. The mounting part 108 may be slidable on the rails 204. The mounting part 108 may comprise one or more feet 203. The feet 203 may be slidable on the rails 204. The rails 204 may define the path of the pedal 101. If rails 204 are linear, then the path of the pedal 101 may be linear. The rails 204 may be non-linear, such as curved, so as to provide a non-linear path of the pedal 101. The base part 202 may further comprise a fixing rail 205. The fixing rail 205 may be configured to lock the mounting part 108 into one or more position. The driver of the vehicle 300 may adjust the pedal 101 into the one of the one or more positions on the fixing rails 205. The locking of the mounting part 108 to the fixing rail 205 may be controlled manually by a lever, or other control means, accessible by the driver of the vehicle 300. Alternatively, the adjustment and locking of the mounting part 108 to the fixing rail 205 may be controlled by an electronic adjuster. For example, the user of the vehicle 300 may use input controls to adjust the position of the pedal 101, and a motor may move the position of the pedal 101.

The connection member 110 may be coupled to the actuator 118 through the second joint 111. The second joint 111 may permit rotation of the connection member 110 to cause an input to the actuator 118. The actuator 118 may comprise an input rod 115. The input rod 115 may provide inputs to the actuator 118 by inserting into the actuator 118.

The second joint 109 may be coupled to the input rod 116 by means of a second rocker 113, 114. The second joint 109 may input rotation into the second rocker 113, 114 which in turn may cause translation of the input rod 115. In the embodiment shown in Figures 1 and 2, an anti-clockwise rotation of the second joint 109 may cause a translation of the input rod 115 into the actuator 118. The second joint 111 may be mounted to an actuator body 112. The second rocker 113, 114 may be mounted to the actuator body 112. The second rocker 113, 114 may comprise second rocker rod 113. The second joint 111 may be fixedly coupled to the second rocker rod 113. The second rocker rod 113 may rotate about the primary first joint axis E1. The second rocker 113, 114 may comprise a second rocker joint 114. The second rocker rod 113 may be coupled to the input rod 115 through the second rocker joint 114. Rotation of the second joint 111 causes the second rocker rod 113 to rotate, which in turn causes second rocker joint 114 to translate, which in turn causes the input rod 115 to translate. In this way, the rotational input of the second joint 111 may be converted into translation input of the input rod 115.

The input rod 115 may further comprise an input rod joint 116 and an input rod extension 117. The input rod 115 may be coupled to the input rod extension 117 by the input rod joint 116. The input rod joint 116 may comprise one degree of freedom. In the embodiment in Figure 1, the input rod joint 116 comprises one degree of freedom provided by a standard joint. The input rod joint 116 may comprise more than one degree of freedom, such as 3 degrees of freedom. In the embodiment in Figure 2, the input rod joint 116 comprises three degrees of freedom provided by a ball joint. The second rocker joint 113 and input rod joint 116 in combination may provide a means to ensure the distal end of the input rod 115 is in the correct place while the body of the input rod 115 may have a tolerance on the angle. In other words, the second rocker joint 113 and the input rod joint 116 may mean that even if the input rod 115 is at an angle, the distal end of the input rod 115 which is inserted into the actuator 118 can still be in the correct position. This is because the second rocker joint 113 and the input rod joint 116 are free to rotate as required. In the embodiment in Figure 1 comprising the standard joint 116, the input rod 115 can have an angular tolerance vertically. In the embodiment in Figure 2 comprising the ball joint 116, the input rod 115 can have an angular tolerance vertically and laterally, and rotational tolerance. This can be beneficial for a remotely mounted actuator 118 as the relative position between the actuator 118 and the pedal box 108, 202 may have a degree of tolerance.

Taking each component in the apparatus 100, the following method steps may be carried out:
- The driver may adjust the position of the pedal box 108, 202. The driver may adjust the position of the mounting part 108 relative to the base part 202 to set the position of the pedal 101, as desired (left or right in the Figures).
   ∘ During adjustment, one or more of the following may occur: the first joint 109 may rotate about the secondary first joint axis C2, the first joint 109 may rotate about the tertiary first joint axis C3, the connection member 110 may extend and/or contract, the second joint 111 may rotate about the secondary second joint axis E2, and the second joint 111 may rotate about the tertiary second joint axis E3.
- The driver may provide an input on the pedal 101. The driver may depress the pedal 101 (left in the Figures). This may cause the pedal 101 to rotate (anti-clockwise in the Figures).
- The rotation of the pedal 101 may cause the pedal rod 104 to translate (left in the Figures), and rotate (clockwise in the Figures).
- The translation of the pedal rod 104 may cause the first joint rod 106 rotate (anti-clockwise in the Figures).
- The rotation of the first joint rod 106 may cause the first joint 109 to rotate about the primary first joint axis C1 (anti-clockwise in the Figures).
- The rotation of the first joint 109 may cause the connection member 110 to rotate about the connection member axis D (anti-clockwise in the Figures).
- The rotation of the connection member 110 may cause the second joint 109 to rotate about the primary first joint axis E1 (anti-clockwise in the Figures).
- The rotation of the second joint 109 may cause the second rocker joint 113 to rotate about the primary first joint axis E1 (anti-clockwise in the Figures).
- The rotation of the second rocker joint 113 may cause the input rod 115 to translate (left in the Figures).
- The translation of the input rod 115 may provide an input to the actuator 118.

It will be appreciated that one or more of these steps may be omitted, or one or more further steps may be included, depending on the embodiment of the apparatus 100.

In the alternative embodiment described herein, the adjustment step may be replaced by locating of the actuator 118. The pedal 101 may be located in a fixed position, and the actuator 118 may be located in the position for the particular vehicle 300. The apparatus 100 may allow different distances and/or routes between the pedal 101 and the actuator 118 in different vehicles 300 to be accommodated.

The apparatus 100 described herein may be implemented on a vehicle 300, such as a car. In particular, the apparatus 100 may be implemented on a sports car or racing car in which there are requirements for a low seat mechanism. A vehicle 300 may comprise the apparatus 100 described herein.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A movable pedal apparatus for driving a remotely mounted actuator, the movable pedal apparatus comprising:
a pedal;
a connection member;
a first joint through which the pedal is coupled to the connection member, the first joint permitting transfer of rotation of the pedal to the connection member to cause rotation of the connection member; and
a second joint through which the connection member is couplable to the remotely mounted actuator, the second joint permitting rotation of the connection member to cause an input to the remotely mounted actuator;
wherein connection member has a variable length between the first joint and the second joint so as to permit translational movement of the first joint relative to the second joint so that the pedal is movable between an initial position and a subsequent position.

2. A movable pedal apparatus for driving an actuator, the movable pedal apparatus comprising:
the actuator;
a connection member;
a first joint through which a pedal is couplable to the connection member, the first joint permitting transfer of rotation of the pedal to the connection member to cause rotation of the connection member; and
a second joint through which the connection member is coupled to the actuator, the second joint permitting rotation of the connection member to cause an input to the actuator;
wherein connection member has a variable length between the first joint and the second joint so as to permit translational movement of the first joint relative to the second joint so that the actuator is movable between an initial position and a subsequent position.

3. The movable pedal apparatus according to claim 1 or 2, wherein the first joint comprises at least three degrees of freedom and the second joint comprises at least three degrees of freedom.

4. A movable pedal apparatus for driving a remotely mounted actuator, the movable pedal apparatus comprising:
a pedal;
a connection member;
a first joint through which the pedal is coupled to the connection member, the first joint permitting transfer of rotation of the pedal to the connection member to cause rotation of the connection member; and
a second joint through which the connection member is couplable to the remotely mounted actuator, the second joint permitting rotation of the connection member to cause an input to the remotely mounted actuator;
wherein the first joint comprises at least three degrees of freedom and the second joint comprises at least three degrees of freedom so that the pedal is movable from an initial position to a subsequent position.

5. A movable pedal apparatus for driving an actuator, the movable pedal apparatus comprising:
the actuator;
a connection member;
a first joint through which a pedal is couplable to the connection member, the first joint permitting transfer of rotation of the pedal to the connection member to cause rotation of the connection member; and
a second joint through which the connection member is coupled to the actuator, the second joint permitting rotation of the connection member to cause an input to the actuator;
wherein the first joint comprises at least three degrees of freedom and the second joint comprises at least three degrees of freedom so that the actuator is movable from an initial position to a subsequent position.

6. The movable pedal apparatus according to claim 4 or 5, wherein the first joint and the second joint are arranged to translate relative to one another.

7. The movable pedal apparatus according to any preceding claim, wherein the first joint comprises a cardanic joint or a homokinetic joint and/or the second joint comprises a cardanic joint or homokinetic joint.

8. The movable pedal apparatus according to any preceding claim, further comprising a pedal box, the pedal being mounted to the pedal box.

9. The movable pedal apparatus according to any preceding claim, wherein the pedal is constrained to translate along a linear path between the initial position and the subsequent position.

10. The movable pedal apparatus according to claim 9 when dependent on claim 8, wherein pedal is slidably mounted to the pedal box so that the pedal box defines the linear path, and optionally wherein the pedal box comprises: a mounting part on which the pedal is mounted; and a base part on which the mounting part is slidable.

11. The movable pedal apparatus according to any preceding claim, wherein the pedal is constrained to rotate about a pedal axis.

12. The movable pedal apparatus according to claim 11, when dependent on claim 8, wherein the pedal is rotatably mounted to the pedal box at a pedal joint so that the pedal joint defines the pedal axis, and optionally wherein:
the pedal is coupled to the first joint through a first rocker so that rotation of the pedal causes rotation of the first joint; or
the first joint is the pedal joint so that rotation of the pedal causes rotation of the first joint.

13. The movable pedal apparatus according to any preceding claim, wherein the actuator comprises an input rod for causing input to the actuator, the second joint being coupled to the input rod through a second rocker so that rotation of the second joint causes translation of the input rod.

14. The movable pedal apparatus according to any preceding claim, wherein the connection member comprises a first sub member and a second sub member, the first sub member being translatable relative to the second sub member so as to permit extension of the connection member, and optionally wherein:
the first sub member at least partially encloses the second sub member;
the first sub member and the second sub member are constrained to rotate together when the connection member rotates; and/or
the first sub member and the second sub member are constrained to rotate together by a spline formed in the first sub member and the second sub member.

15. The movable pedal apparatus according to any preceding claim, wherein:
the pedal is a brake pedal of a vehicle; and/or
the actuator is one or more of: a brake actuator, a hydraulic brake booster, a pneumatic brake booster, a brake-by-wire actuator, a standard master cylinder, a tandem master cylinder, a single master cylinder, and a twin master cylinder.

16. The movable pedal apparatus according to any preceding claim, comprising the pedal and the actuator.

17. A vehicle comprising the movable pedal apparatus according to any preceding claim.
